(19) Europäisches Patentamt
European Patent Office
Office européen des brevets

(11) EP 1 837 502 A2

(12) **EUROPEAN PATENT APPLICATION**

(43) Date of publication:
26.09.2007 Bulletin 2007/39

(51) Int Cl.:
*F01N 11/00* (2006.01)     *F02D 41/14* (2006.01)

(21) Application number: 07004084.5

(22) Date of filing: 27.02.2007

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 18.05.2006 JP 2006138531
24.03.2006 JP 2006082097

(71) Applicant: **Honda Motor Co., Ltd.**
**Tokyo 107-8556 (JP)**

(72) Inventors:
• **Suehiro, Yukio**
  **Wako-shi,**
  **Saitama (JP)**
• **Iida, Jun**
  **Wako-shi,**
  **Saitama (JP)**

(74) Representative: **Herzog, Markus et al**
**Weickmann & Weickmann**
**Patentanwälte**
**Postfach 86 08 20**
**81635 München (DE)**

(54) **Catalyst deterioration detecting apparatus**

(57) A deterioration detecting method for a catalyst in an exhaust system of an internal combustion engine (1) for purifying exhaust gases, the system including a first oxygen concentration sensor (17) and a second oxygen concentration sensor (18) disposed, respectively, upstream and downstream of the catalyst (14a). Intake air flow rate of the engine is detected (7). An amount of oxygen flowing into the catalyst (14a) is calculated according to an oxygen concentration detected by the first sensor (17) and the detected intake air flow rate. An air-fuel ratio of an air-fuel mixture supplied to the engine (1) is controlled by alternately switching between lean and rich with respect to the stoichiometric ratio according to a result of comparison between the calculated and target values of the inflowing oxygen amount. A deterioration degree of the catalyst (14a) is detected based on an output of the second sensor (18) when performing the switching control of the air-fuel ratio.

*FIG. 1*

EP 1 837 502 A2

**Description**

BACKGROUND OF THE INVENTION

Field of the Invention

The present invention relates to a deterioration detecting apparatus for a catalyst which is provided in an exhaust system of an internal combustion engine for purifying exhaust gases and, particularly, to the deterioration detecting apparatus that detects a degree of deterioration of the catalyst.

Description of the Related Art

A technique for determining deterioration of the catalyst which is provided in an exhaust system of an internal combustion engine for purifying exhaust gases (hereinafter referred to simply as "catalyst") is conventionally known. For example, Japanese Patent Laid-open No. H02-207159 discloses an apparatus for detecting deterioration of the catalyst. This apparatus measures a first time period CB and/or a second time period CA and determines deterioration of the catalyst based on the first time period CB and/or the second time period CA. The first time period CB is a time period from the time the air-fuel ratio of the air-fuel mixture supplied to the engine is switched from being lean to being rich with respect to the stoichiometric ratio to the time an output of an air-fuel ratio sensor (oxygen concentration sensor), that is disposed downstream of the catalyst, changes to a value indicative of a rich air-fuel ratio. The second time period CA is a time period from the time the air-fuel ratio is switched from being rich to being lean with respect to the stoichiometric ratio to the time the output of the air-fuel ratio sensor disposed downstream of the catalyst changes to a value indicative of the lean air-fuel ratio.

In the above-described conventional apparatus, the degree of deterioration of the catalyst is detected by making the output of the air-fuel ratio sensor disposed downstream of the catalyst change by an amount greater than a predetermined value. Accordingly, even when the determination is performed with respect to a normal (not deteriorated) catalyst, it is necessary to change the air-fuel ratio so that the output of the downstream side air-fuel ratio sensor changes by an amount greater than the predetermined value. Therefore, there is a problem that the time period in which the exhaust characteristics are getting worse is likely to be prolonged by performing the deterioration detection.

SUMMARY OF THE INVENTION

The present invention was attained contemplating the above-described point, and an object of the present invention is to provide a deterioration detecting apparatus for a catalyst which can detect a degree of deterioration of the catalyst with sufficient accuracy and without making the exhaust characteristics worse.

To attain the above-described object, the present invention provides a deterioration detecting apparatus for a catalyst (14a) provided in an exhaust system (13) of an internal combustion engine (1) for purifying exhaust gases. The deterioration detecting apparatus detects deterioration of the catalyst and comprises an intake air flow rate detecting means (7), a first oxygen concentration sensor (17), a second oxygen concentration sensor (18), inflowing oxygen amount calculating means, air-fuel ratio switching control means, and deterioration detecting means. The intake air flow rate detecting means (7) detects an intake air flow rate (GAIR) of the engine. The first oxygen concentration sensor (17) is provided upstream of the catalyst and the second oxygen concentration sensor (18) is provided downstream of the catalyst. The inflowing oxygen amount calculating means calculates an amount of oxygen (OS) flowing into the catalyst (14a) according to the oxygen concentration (O2N) detected by the first oxygen concentration sensor (17) and the intake air flow rate (GAIR) detected by the intake air flow rate detecting means. The air-fuel ratio switching control means controls an air-fuel ratio of an air-fuel mixture supplied to the engine by alternately switching the air-fuel ratio to and from being lean and rich with respect to the stoichiometric ratio according to the result of a comparison between the inflowing oxygen amount (OS) calculated by the inflowing oxygen amount calculating means and target values (OSOBJR, OSOBJL) of the inflowing oxygen amount. The deterioration detecting means detects a deterioration degree (RESULT) of the catalyst based on an output (SVO2) of the second oxygen concentration sensor during an operation of the air-fuel ratio switching control means.

With this configuration, the amount of oxygen flowing into the catalyst is calculated according to the oxygen concentration detected by the first oxygen concentration sensor and the intake air flow rate detected by the intake air flow rate detecting means. The air-fuel ratio switching control (perturbation control) in which the air-fuel ratio of the air-fuel mixture to be supplied to the engine is changed from lean to rich with respect to the stoichiometric ratio or vice versa, is performed according to the result of a comparison between the inflowing oxygen amount and the target values of the inflowing oxygen amount. The deterioration degree of the catalyst is detected based on the output of the second oxygen concentration sensor during execution of the air-fuel ratio switching control. By setting the target values of the inflowing oxygen amount so that the second oxygen concentration sensor output hardly changes when the catalyst is normal and greatly changes when the catalyst is deteriorated, the deterioration degree can be detected quickly at the time the catalyst begins to deteriorate with a minimum of degrading of the exhaust characteristics and without degrading the exhaust characteristics at all when the catalyst is normal.

Preferably, the air-fuel ratio switching control means performs the switching control of the air-fuel ratio according to the result of a comparison between the output (SVO2) of the second oxygen concentration sensor and predetermined values (SVO2LEAN, SVO2RICH).

With this configuration, the switching control of the air-fuel ratio is performed according to a result of a comparison between the output value of the second oxygen concentration sensor and the predetermined values. Therefore, when the catalyst becomes deteriorated and the output value of the second oxygen concentration sensor changes before the inflowing oxygen amount reaches the target value, the exhaust characteristics are prevented from becoming worse.

Preferably, the air-fuel ratio switching control means calculates the target values (OSOBJR, OSOBJL) according to the intake air flow rate (GAIR).

With this configuration, the target value of the inflowing oxygen amount is calculated according to the intake air flow rate. An amount of oxygen which can be stored in the catalyst changes depending on the exhaust flow rate, i.e., the intake air flow rate. Therefore, by setting the target value according to the intake air flow rate, the air-fuel ratio is switched at appropriate intervals. Accordingly, the deterioration degree of the catalyst can be detected accurately, and deterioration of the exhaust characteristics can be prevented.

Preferably, the deterioration detecting apparatus further includes catalyst temperature detecting means (19) for detecting a temperature (TCAT) of the catalyst, wherein the air-fuel ratio switching control means calculates the target values (OSOBJR, OSOBJL) according to the catalyst temperature (TCAT).

With this configuration, the target value of the inflowing oxygen amount is calculated according to the catalyst temperature. An amount of oxygen which can be accumulated in the catalyst changes depending on the temperature of the catalyst. Therefore, by calculating the target value according to the catalyst temperature, the air-fuel ratio is switched at appropriate intervals. Accordingly, the deterioration degree of the catalyst can be accurately detected, and deterioration of the exhaust characteristics can be prevented.

Preferably, the deterioration detection apparatus further includes inhibiting means for inhibiting the deterioration degree detection by the deterioration detecting means according to the amount of inflowing oxygen (OS).

With this configuration, the detection of the deterioration degree is inhibited depending upon the inflowing oxygen amount. Accurate detection of the deterioration degree cannot be performed when the calculated amount of inflowing oxygen becomes unusually large. Accordingly, the detection accuracy can be prevented from decreasing by inhibiting the deterioration degree detection.

Preferably, the exhaust system is further provided with a second catalyst (14b) for purifying exhaust gases downstream of the second oxygen concentration sensor (18).

With this configuration, the exhaust gases are further purified by the second catalyst provided downstream of the second oxygen concentration sensor. Therefore, emission of HC or NOx can be prevented and good exhaust characteristics can be maintained when the deterioration degree detection process is performed with respect to the deteriorated first catalyst.

Preferably, the air-fuel ratio switching control means sets at least one updating rate ($\Delta$ KCMDR, $\Delta$ KCMDL) of the air-fuel ratio at the time of switching the air-fuel ratio according to the intake air flow rate (GAIR) of the engine and the target values (OSOBJR, OSOBJL).

With this configuration, the updating rate of the air-fuel ratio at the time of switching the air-fuel ratio is set according to the intake air flow rate of the engine and the target value of the amount of inflowing oxygen. This makes the period of switching air-fuel ratio substantially constant irrespective of changes in the engine operating condition. For example, in a high load operating condition, where the intake air flow rate is large, the influence of the response characteristic deterioration of the second oxygen concentration sensor is reduced by reducing the updating rate of the air-fuel ratio. In this manner, the catalyst deterioration determination can be more accurately performed. On the other hand, in a low load operating condition, where the intake air flow rate is small, the time period which is necessary for determining the catalyst deterioration can be shortened by increasing the updating rate of the air-fuel ratio.

Preferably, the deterioration detecting apparatus further includes characteristic change detecting means for detecting a characteristic change parameter (VLAFFC) indicative of a change in an output characteristic of the first oxygen concentration sensor and correcting means for correcting an output (VLAF) of the first oxygen concentration sensor according to the characteristic change parameter (VLAFFC), wherein the inflowing oxygen amount calculating means calculates the amount of inflowing oxygen (OS) using the output (VLAF) corrected by the correcting means.

With this configuration, the characteristic change parameter indicative of a change in the output characteristic of the first oxygen concentration sensor is detected; the output of the first oxygen concentration sensor is corrected according to the characteristic change parameter; and the catalyst inflowing oxygen amount is calculated using the corrected output. Therefore, accurate calculation of the oxygen amount can be performed excluding the influence of aging in the output characteristic of the first oxygen concentration sensor; and the catalyst deterioration determination can be accurately performed.

BRIEF DESCRIPTION OF THE DRAWINGS

FIG. 1 shows a configuration of an internal combustion engine and a control system therefor, including a deterioration detecting apparatus for a catalyst according to one embodiment of the present invention;
FIGs. 2A and 2B illustrate a deterioration detection method of the catalyst;
FIG. 3 is a flowchart of a main routine for performing the deterioration detection of the catalyst;
FIGs. 4 and 5 show a flowchart of a perturbation signal generation process executed in the process of FIG. 3;
FIGs. 6A - 6E show tables referred to in the process of FIG. 4 or FIG. 5;
FIG. 7 is a flowchart of the KCMD calculation process executed in the process of FIG. 3;
FIGs. 8A and 8B show time charts for illustrating the process of FIG. 7;
FIGs. 9 and 10 show a flowchart of the deterioration determination process executed in the process of FIG. 3;
FIG. 11 is a flowchart of a main routine of a deterioration determination process according to the second embodiment of the present invention;
FIG. 12 illustrates an aging change in an output characteristic of a proportional type oxygen concentration sensor;
FIG. 13 is a flowchart of the process for correcting the output of the proportional type oxygen concentration sensor executed in the process of FIG. 11;
FIGs. 14A and 14B show time charts for illustrating a calculation method of a parameter (VLAFFC) indicative of a change in an output characteristic of the proportional type oxygen concentration sensor;
FIG. 15 shows a table referred to in the process of FIG. 13;
FIG. 16 is a flowchart of the FMCND calculation process executed in the process of FIG. 11;
FIG. 17 is a flowchart of the KCMD calculation process executed in the process of FIG. 11; and
FIGs. 18A and 18B show tables referred to in the process of FIG. 17.

DETAILED DESCRIPTION OF THE PREFERRED EMBODIMENTS

Preferred embodiments of the present invention will now be described with reference to the drawings.

First Embodiment

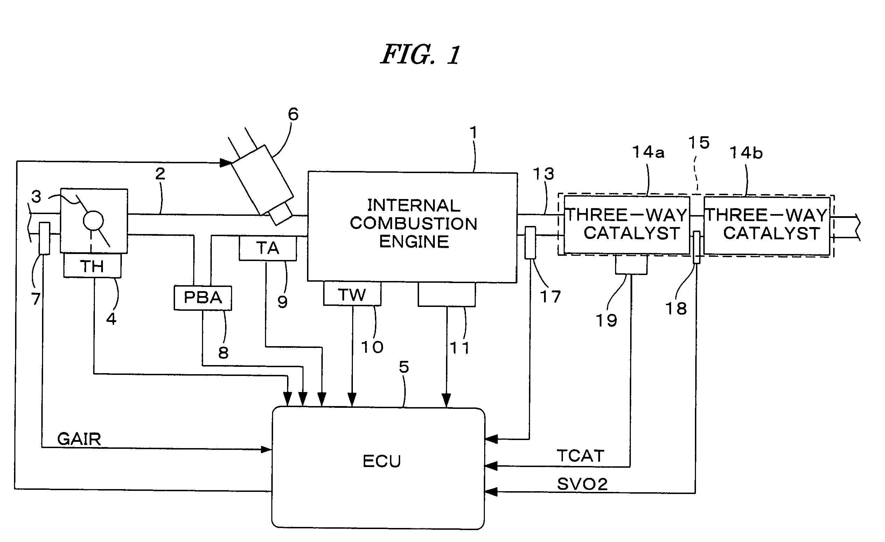

FIG. 1 is a schematic diagram showing a general configuration of an internal combustion engine (hereinafter referred to as "engine") and a control system therefor, including a deterioration detecting apparatus for a catalyst according to one embodiment of the present invention. The engine is, for example, a four-cylinder engine 1 having an intake pipe 2 provided with a throttle valve 3. A throttle valve opening (TH) sensor 4 is connected to the throttle valve 3, outputting an electrical signal according to an opening of the throttle valve 3 and supplying the electrical signal to an electronic control unit 5 (hereinafter referred to as "ECU").
Fuel injection valves 6 are inserted into the intake pipe 2 at locations intermediate the cylinder block of the engine 1 and the throttle valve 3 and slightly upstream of the respective intake valves (not shown). These fuel injection valves 6 are connected to a fuel pump (not shown) and are electrically connected to the ECU 5. A valve opening period of each fuel injection valve 6 is controlled by a signal output from the ECU 5.
An intake air flow rate sensor 7 for detecting an intake air flow rate GAIR is disposed upstream of the throttle valve 3. Further, an intake pressure sensor 8 for detecting an intake pressure PBA and an intake air temperature sensor 9 for detecting an intake air temperature TA are disposed downstream of the throttle valve 3. The detection signals of these sensors are supplied to the ECU 5.
An engine coolant temperature (TW) sensor 10, such as a thermistor, is mounted on the body of the engine 1 to detect an engine coolant temperature (cooling water temperature) TW. A temperature signal corresponding to the detected engine coolant temperature TW is output from the sensor 10 and supplied to the ECU 5.
A crank angle position sensor 11 for detecting a rotation angle of a crankshaft (not shown) of the engine 1 is connected to the ECU 5. A signal corresponding to a detected rotation angle of the crankshaft is supplied to the ECU 5. The crank angle position sensor 11 includes a cylinder discrimination sensor which outputs a pulse (hereinafter referred to as "CYL pulse") at a predetermined crank angle position for a specific cylinder of the engine 1. The crank angle position sensor 11 also includes a top dead center (TDC) sensor which outputs a TDC pulse at a crank angle position before a TDC of a predetermined crank angle starts at an intake stroke in each cylinder (i.e., at every 180° crank angle in the case of a four-cylinder engine) and a crank angle (CRK) sensor for generating one pulse (hereinafter referred to as "CRK pulse") with a CRK period (e.g., a period of 30°, shorter than the period of generation of the TDC pulse). The CYL pulse, the TDC pulse and the CRK pulse are supplied to the ECU 5. The CYL, TDC and CRK pulses are used to control the various timings, such as a fuel injection timing and an ignition timing, and to detect an engine rotational speed NE.

The exhaust pipe 13 is provided with a catalyst unit 15 which is configured with one container containing two three-way catalysts 14a and 14b.

The three-way catalysts 14a and 14b have oxygen storing capacity and store oxygen contained in the exhaust gases in the exhaust lean condition when the air-fuel ratio of the air-fuel mixture supplied to the engine 1 is lean with respect to the stoichiometric ratio. At that time, the oxygen concentration in the exhaust gases is relatively high. The three-way catalysts oxidize HC and CO contained in the exhaust gases with the stored oxygen in the exhaust rich condition when the air-fuel ratio of the air-fuel mixture supplied to the engine 1 is rich with respect to the stoichiometric ratio. At that time, the oxygen concentration in the exhaust gases is low with a relatively large amount of HC and CO components present.

A proportional type oxygen concentration sensor 17 (hereinafter referred to as "LAF sensor 17") is mounted on the upstream side of the catalyst unit 15. The LAF sensor 17 outputs the electrical signal substantially proportional to the oxygen concentration (air-fuel ratio) in the exhaust gases and supplies the electrical signal to the ECU 5.

A binary type oxygen concentration sensor 18 (hereinafter referred to as "O2 sensor") is mounted in the exhaust pipe 13 at a position between the three-way catalysts 14a and 14b. The detection signal thereof is supplied to the ECU 5. The O2 sensor 18 has a characteristic such that its output rapidly changes in the vicinity of the stoichiometric ratio. Specifically, the O2 sensor 18 outputs a high level signal during a rich condition with respect to the stoichiometric ratio, and outputs a low level signal during a lean condition with respect to the stoichiometric ratio. Further, the first three-way catalyst 14a is provided with a catalyst temperature sensor 19 for detecting a temperature TCAT (hereinafter referred to as "catalyst temperature") of the first three-way catalyst 14a. The detection signal is supplied to the ECU 5.

The ECU 5 includes an input circuit, a central processing unit (hereinafter referred to as "CPU"), a memory circuit, and an output circuit. The input circuit performs various functions, including shaping the waveforms of input signals from various sensors, correcting the voltage levels of the input signals to a predetermined level, and converting analog signal values into digital values. The memory circuit preliminarily stores various operating programs to be executed by the CPU and stores the results of computations, or the like, by the CPU. The output circuit supplies control signals to the fuel injection valves 6.

The CPU in the ECU 5 determines various engine operating conditions according to various engine operating parameter signals, as described above, and calculates a fuel injection period TOUT of each fuel injection valve 6 to be opened in synchronism with the TDC signal pulse using equation (1) according to the above determined engine operating conditions.

$$TOUT = TIM \times KCMD \times KAF \times K1 + K2 \qquad (1)$$

TIM is a basic fuel amount, specifically, a basic fuel injection period of each fuel injection valve 6, and is determined by retrieving a TI table set according to the intake flow rate. The TIM table is set so that the air-fuel ratio of the air-fuel mixture supplied to the engine 1 becomes substantially equal to the stoichiometric ratio in an operating condition.

KCMD is a target air-fuel ratio coefficient set according to the O2 sensor output SVO2 when performing normal control. The target air-fuel ratio coefficient KCMD is proportional to the reciprocal of the air-fuel ratio A/F, i.e., proportional to a fuel-air ratio F/A, and takes a value of "1.0" for the stoichiometric ratio. Therefore, the target air-fuel ratio coefficient KCMD is referred to also as "target equivalent ratio". When performing a deterioration determination of the catalyst described below, the target air-fuel ratio coefficient KCMD is set so that the air-fuel ratio is controlled to be alternately in a rich condition and a lean condition with respect to the stoichiometric ratio.

KAF is an air-fuel ratio correction coefficient calculated using a PID (proportional, integral, and differential) control method or an adaptive control method using a self-tuning regulator so that a detected equivalent ratio KACT calculated from a detected value of the LAF sensor 17 coincides with the target equivalent ratio KCMD when an execution condition of the air-fuel ratio feedback control is satisfied.

K1 and K2 are, respectively, a correction coefficient and a correction variable computed according to various engine parameter signals. The correction coefficient K1 and the correction variable K2 are set to predetermined values that optimize various characteristics, such as fuel consumption characteristics and engine acceleration characteristics, according to engine operating conditions.

The CPU in the ECU 5 supplies a drive signal for opening each fuel injection valve 6 according to the fuel injection period TOUT, obtained as described above, through the output circuit to the fuel injection valve 6. Further, the CPU in the ECU 5 performs the deterioration determination of the three-way catalyst 14a as described below. When the three-way catalyst 14a is determined to be deteriorated, it is estimated that the three-way catalyst 14b is also deteriorated to the almost same degree, and, for example, a warning lamp is turned on.

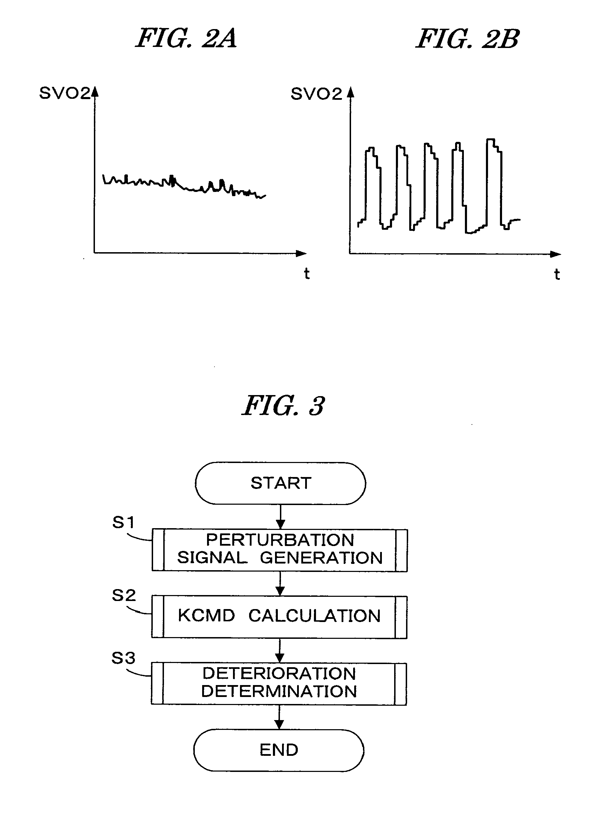

The deterioration determination of the three-way catalyst is performed based on the O2 sensor output SVO2 when changing the air-fuel ratio of the air-fuel mixture supplied to the engine 1 with a center of the stoichiometric ratio (when alternately performing the lean operation and the rich operation). As described above, the control in which the lean operation and the rich operation are alternately performed is hereinafter referred to as "perturbation control". Specifically, the lean operation is performed for supplying oxygen to the three-way catalyst by an amount that can be stored in the normal three-way catalyst but cannot be stored in the deteriorated three-way catalyst. Thereafter, the lean operation is switched to the rich operation. The rich operation is performed so that almost all of the stored oxygen is discharged. When such perturbation control is executed, the O2 sensor output SVO2 hardly changes as shown in FIG. 2A if the three-way catalyst is not deteriorated. But if the three-way catalyst is deteriorated, the O2 sensor output greatly changes as shown in FIG. 2B. Therefore, in this embodiment, the deterioration determination of the three-way catalyst is performed by detecting this difference.

FIG. 3 is a flowchart of a main routine of the deterioration determination process of the three-way catalyst. This process is executed by the CPU in the ECU 5 at predetermined time intervals (for example, 10 milliseconds).

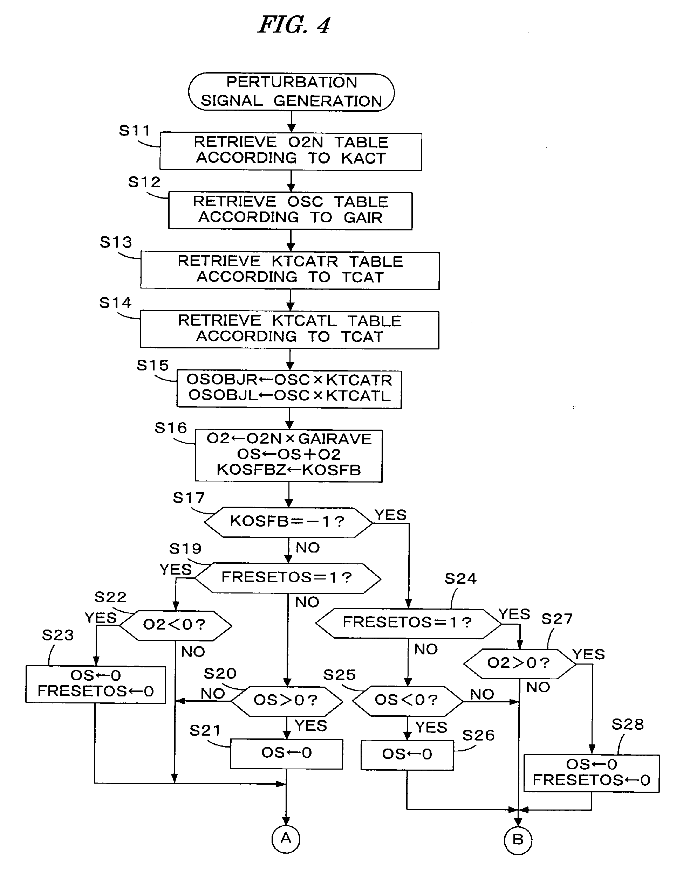

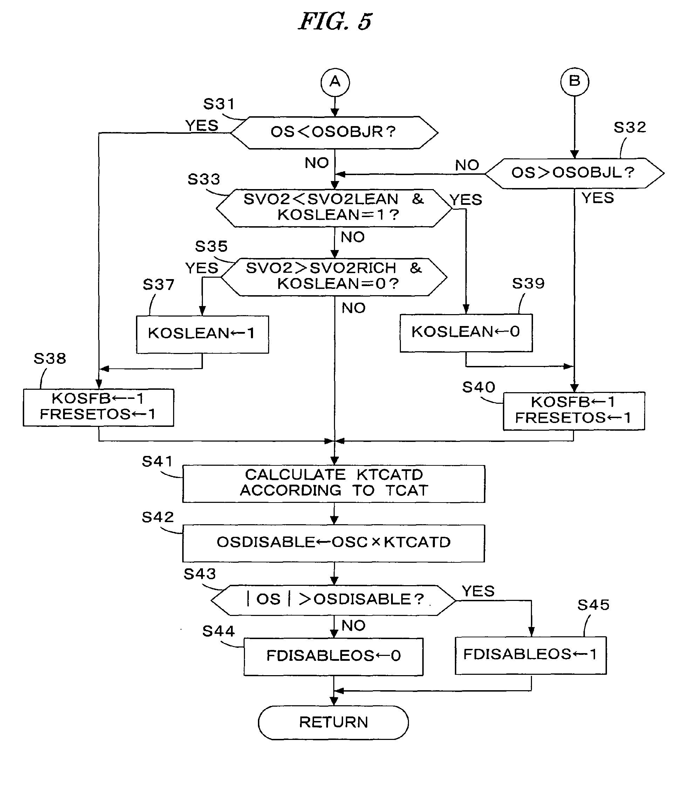

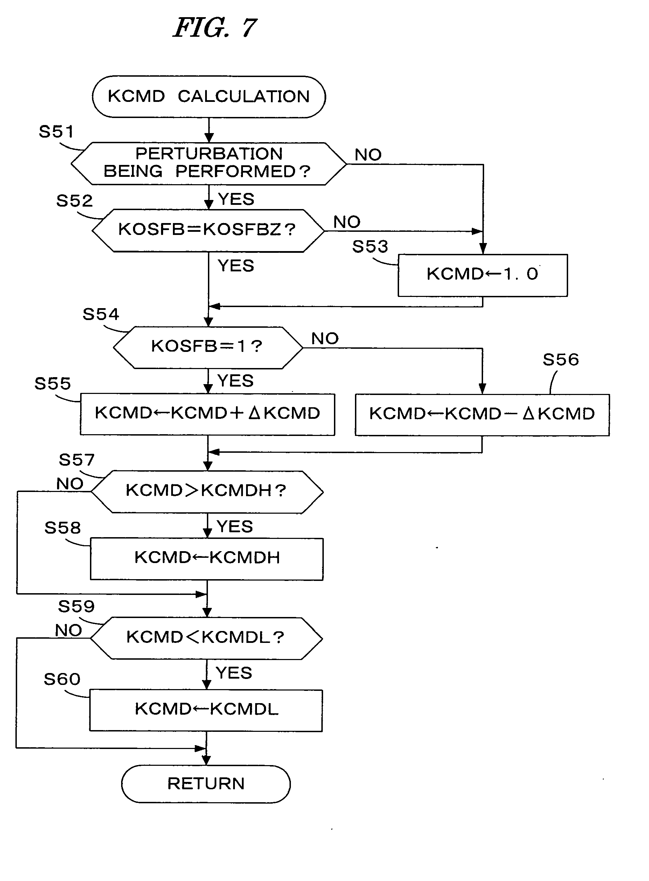

In step S1, the process shown in FIGs. 4 and 5 is executed, and a perturbation signal for changing the air-fuel ratio is generated. Specifically, the generation of the perturbation signal corresponds to setting an air-fuel ratio switching parameter KOSFB to "1" or "-1". In step S2, the process shown in FIG. 7 is executed to set the target air-fuel ratio coefficient KCMD according to the air-fuel ratio switching parameter KOSFB. During normal control, the target air-fuel ratio coefficient KCMD is set according to the output SVO2 of the O2 sensor 18. But when the deterioration determination of the three-way catalyst is performed, the target air-fuel ratio coefficient KCMD is set according to the air-fuel ratio switching parameter KOSFB that is set in step S1, thereby performing the perturbation control of the air-fuel ratio.

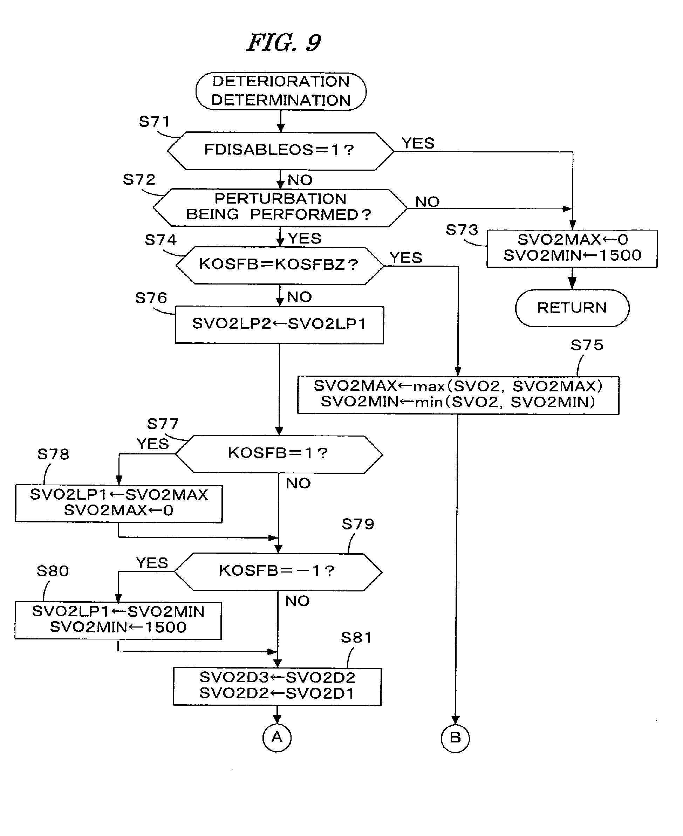

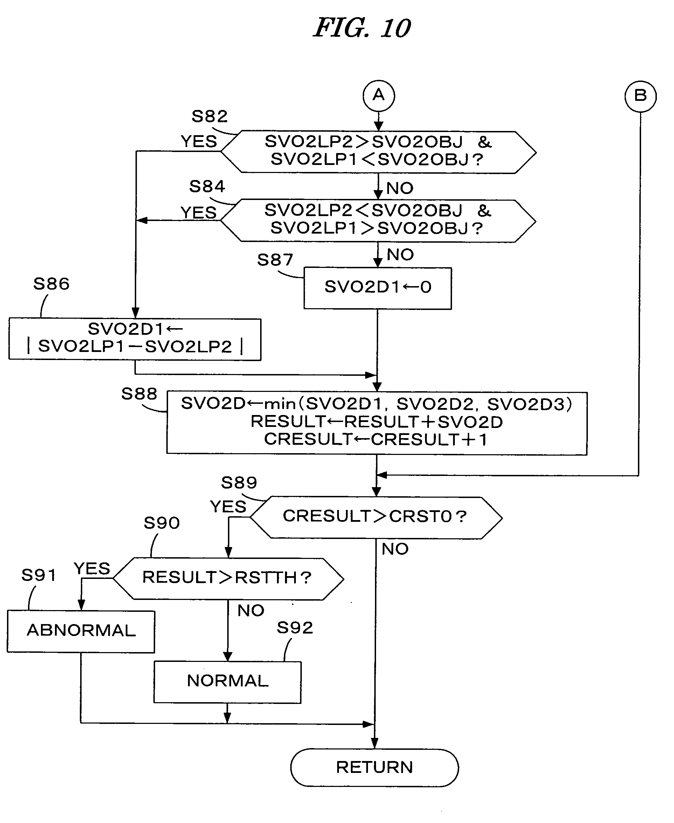

In step S3, the process shown in FIGs. 9 and 10 is executed, and a determination parameter RESULT indicative of the deterioration degree of the three-way catalyst is calculated based on the O2 sensor output SVO2 during the perturbation control. If the determination parameter RESULT exceeds a determination threshold value RSTTH, the three-way catalyst is determined to no longer be normal and, thus, is considered to be deteriorated.

FIGs. 4 and 5 show a flowchart of a perturbation signal generation process executed in step S1 of FIG. 3.

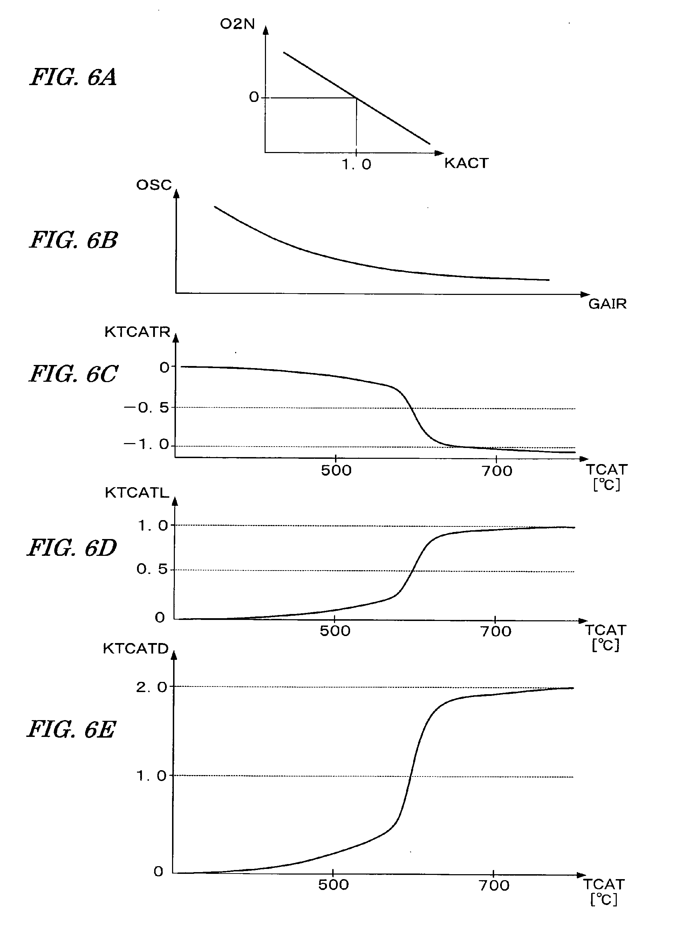

In step S11, an O2N table shown in FIG. 6A is retrieved according to a detected equivalent ratio KACT calculated according to the output of the LAF sensor 17 to calculate an oxygen concentration parameter O2N which is proportional to an oxygen concentration in the exhaust gases. The O2N table is set as follows: the oxygen concentration parameter O2N is set to "0" when the oxygen concentration detected by the LAF sensor 17 is equal to an oxygen concentration O2ST (KACT = 1.0) corresponding to the stoichiometric ratio; the oxygen concentration parameter O2N is set to a positive value when the oxygen concentration detected by the LAF sensor 17 is higher than the oxygen concentration O2ST (when the air-fuel ratio is lean with respect to the stoichiometric ratio); and the oxygen concentration parameter O2N is set to a negative value when the oxygen concentration detected by LAF sensor 17 is lower than the oxygen concentration O2ST (when the air-fuel ratio is rich with respect to the stoichiometric ratio).

In step S12, an OSC table shown in FIG. 6B is retrieved according to the intake air flow rate GAIR to calculate a reference oxygen amount OSC[g] which is a reference of a deteriorated catalyst. The OSC table is set so that the reference oxygen amount OSC decreases as the intake air flow rate GAIR increases. The time period which is necessary for the exhaust gases to pass through the three-way catalyst becomes shorter as the intake air flow rate GAIR increases. On the other hand, a reaction rate (accumulation rate of oxygen) in the three-way catalyst is substantially constant if a catalyst temperature and a difference (b-a) between the oxygen concentration (a) in the exhaust gases flowing into the three-way catalyst and the oxygen concentration (b) in the exhaust gases that exist in the three-way catalyst are constant. Therefore, the amount of oxygen which can be stored in the three-way catalyst decreases as the intake air flow rate GAIR increases. Consequently, the OSC table is set as shown in FIG. 6B.

In step S13, a KTCATR table shown in FIG. 6C is retrieved according to the catalyst temperature TCAT to calculate a first temperature correction coefficient KTCATR. The KTCATR table is set so that the first temperature correction coefficient KTCATR takes a negative value and decreases (the absolute value may increase) as the catalyst temperature TCAT rises.

In step S14, a KTCATL table shown in FIG. 6D is retrieved according to the catalyst temperature TCAT to calculate a second temperature correction coefficient KTCATL. The KTCATL table is set so that the second temperature correction coefficient KTCATL takes a positive value and increases as the catalyst temperature TCAT rises.

In step S15, the reference oxygen amount OSC and the temperature correction coefficients KTCATR and KTCATL are applied to equations (2) and (3), to calculate a rich limit value OSOBJR and a lean limit value OSOBJL.

$$OSOBJR = OSC \times KTCATR \qquad (2)$$

$$OSOBJL = OSC \times KTCATL \qquad (3)$$

The rich limit value OSOBJR and the lean limit value OSOBJL, which are calculated as described above, are target values of an inflowing oxygen amount OS calculated in step S16 and are used as a threshold value for determining the timing of switching the air-fuel ratio in step S31 or S32 described below. The lean limit value OSOBJL corresponds to an amount of the inflowing oxygen that the normal three-way catalyst can store but the deteriorated three-way catalyst cannot store. The rich limit value OSOBJR is set to a negative value whose absolute value is substantially equal to the lean limit value OSOBJL. In other words, the rich limit value OSOBJR and the lean limit value OSOBJL are set so that the O2 sensor output SVO2 may hardly change when the three-way catalyst is normal, and the O2 sensor output SVO2 may greatly change when the three-way catalyst is deteriorated.

In step S16, the oxygen concentration parameter O2N is applied to equation (4) to calculate an inflowing oxygen flow rate O2. The inflowing oxygen flow rate O2 is applied to equation (5) to calculate an inflowing oxygen amount OS. A preceding value KOSFBZ of the air-fuel ratio switching parameter is set to the present value KOSFB.

$$O2 = O2N \times GAIRAVE \qquad (4)$$

$$OS = OS + O2 \qquad (5)$$

where GAIRAVE is a moving average value of, for example, about six samples of data of the intake air flow rate GAIR, and OS on the right side of the equation (5) is a preceding calculated value. The calculation process (not shown) of the moving average value GAIRAVE is executed in synchronism with generation of the CRK pulse.

In step S17, whether or not the air-fuel ratio switching parameter KOSFB is equal to "-1" is determined. If the answer to step S17 is affirmative (YES), which indicates that the engine 1 is in a lean operating condition, it is determined whether or not a reset flag FRESETOS is equal to "1" (step S24). The reset flag FRESETOS is set to "1" when the value of the air-fuel ratio switching parameter KOSFB is changed (refer to steps S38 and S40). Since the answer to step S24 is affirmative (YES) immediately after the air-fuel ratio switching parameter KOSFB is changed to "-1", the process proceeds to step S27, wherein whether or not the inflowing oxygen flow rate O2 is a positive value is determined. The answer to step S27 is negative (NO) at the beginning of lean operation, and the process immediately proceeds to step S32 (FIG. 5). If lean operation is performed and the oxygen concentration in exhaust gases becomes high, the answer to step S27 becomes affirmative (YES), and the process proceeds to step S28 in which the inflowing oxygen amount OS is set to "0" and the reset flag FRESETOS is returned to "0". Thereafter, the process proceeds to step S32.

If the reset flag FRESETOS is returned to "0", the answer to step S24 becomes negative (NO), and the process proceeds to step S25, wherein whether or not the inflowing oxygen amount OS is a negative value is determined. Normally, the answer to step S25 is negative (NO), and the process immediately proceeds to step S32. If the inflowing oxygen amount OS is a negative value, the inflowing oxygen amount OS is reset to "0" (step S26) and the process proceeds to step S32.

In step S32, whether or not the inflowing oxygen amount OS is greater than the lean limit value OSOBJL is determined. Since the answer to step S32 is negative (NO) at the beginning of lean operation, the process proceeds to step S33, wherein whether or not the O2 sensor output SVO2 is less than a lean predetermined value SVO2LEAN and a downstream oxygen concentration parameter KOSLEAN is equal to "1" (step S33) are determined. The lean predetermined value SVO2LEAN corresponds to an air-fuel ratio which is a little leaner (greater) than the stoichiometric ratio. The downstream oxygen concentration parameter KOSLEAN is a parameter which is set to "0" when the O2 sensor output SVO2 takes a value indicative of the lean air-fuel ratio (refer to step S39). Normally, since the answer to step S33 is negative (NO), the process proceeds to step S35, wherein whether or not the O2 sensor output SVO2 is greater than a rich predetermined value SVO2RICH (> SVO2LEAN) and the downstream oxygen concentration parameter KOSLEAN is equal to "0" are determined. The rich predetermined value SVO2RICH corresponds to an air-fuel ratio which is a little richer (less) than the stoichiometric ratio. Since the answer to step S35 is also normally negative (NO), the process immediately proceeds to step S41.

Thereafter, if lean operation is continued, the inflowing oxygen amount OS increases gradually. If the inflowing oxygen amount OS exceeds the lean limit value OSOBJL in step S32, the process proceeds to step S40 in which the air-fuel ratio switching parameter KOSFB is set to "1" and the reset flag FRESETOS is set to "1", thereby starting rich operation.

If the air-fuel ratio switching parameter KOSFB is changed from "-1" to "1", the process proceeds from step S17 to step S19, wherein whether or not the reset flag FRESETOS is equal to "1" is determined. Since the answer to step S19 is initially affirmative (YES), the process proceeds to step S22, wherein whether or not the inflowing oxygen flow rate O2 is a negative value is determined. At the beginning of rich operation, the answer to step S22 is negative (NO), and the process immediately proceeds to step S31 (FIG. 5). If rich operation is performed and the oxygen concentration in exhaust gases decreases, the answer to step S22 becomes affirmative (YES), and the process proceeds to step S23 in which the inflowing oxygen amount OS is set to "0" and the reset flag FRESETOS is returned to "0". Thereafter, the process proceeds to step S31. After execution of step S23, the inflowing oxygen amount OS takes a negative value during rich operation. This means that reducing components (HC, CO) are supplied to the three-way catalyst 14a, and the oxygen stored in the three-way catalyst 14a is used for oxidizing the reducing components and consequently decreases (flows out).

If the reset flag FRESETOS is returned to "0", the answer to step S19 becomes negative (NO), and the process proceeds to step S20, wherein whether or not the inflowing oxygen amount OS is a positive value is determined. Normally, since the answer to step S20 is negative (NO), the process immediately proceeds to step S31. If the inflowing oxygen amount OS takes a positive value, the inflowing oxygen amount OS is reset to "0" (step S21), and the process proceeds to step S31.

In step S31, whether or not the inflowing oxygen amount OS is less than the rich limit value OSOBJR is determined. Since the answer to step S 31 is negative (NO) at the beginning of rich operation, the process proceeds to step S33 described above. Normally, both of the answers to steps S33 and S35 are negative (NO).

Thereafter, if rich operation is continued, the inflowing oxygen amount OS decreases gradually (the absolute value of the negative value increases). If the inflowing oxygen amount OS becomes less than the rich limit value OSOBJR in step S31, the process proceeds to step S38 in which the air-fuel ratio switching parameter KOSFB is set to "-1" and the reset flag FRESETOS is set to "1", thereby starting lean operation.

If the degree of deterioration of the three-way catalyst 14a increases, the answer to step S33 may become affirmative (YES) during lean operation. Then, the process proceeds from step S33 to step S39 in which the downstream oxygen concentration parameter KOSLEAN is set to "0". Thereafter, the process proceeds to step S40 to start rich operation. That is, in this case, before the inflowing oxygen amount OS exceeds the lean limit value OSOBJL, the switching to rich operation is performed. Further, the answer to step S35 may become affirmative (YES) during rich operation. Then, the process proceeds from step S35 to step S37 in which the downstream oxygen concentration parameter KOSLEAN is set to "1 ". Thereafter, the process proceeds to step S38 to start lean operation. That is, in this case, before the inflowing oxygen amount OS becomes lower than the rich limit value OSOBJR, the switching to rich operation is performed.

The determination using the downstream oxygen concentration parameter KOSLEAN in addition to the O2 sensor output SVO2 is performed for preventing the control from hunting with hysteresis.

According to steps S33, S35, S37, and S39, the exhaust characteristics are prevented from deteriorating even when the three-way catalyst 14a is deteriorated and the O2 sensor output SVO2 changes before the inflowing oxygen amount OS exceeds the limit values OSOBJL and OSOBJR.

In step S41, a KTCATD table shown in FIG. 6E is retrieved according to the catalyst temperature TCAT to calculate a third temperature correction coefficient KTCATD. The KTCATD table is set so that the third temperature correction coefficient KTCATD increases as the catalyst temperature TCAT rises, like the KTCATL table. Further, at the same catalyst temperature TCAT, the third temperature correction coefficient KTCATD is set to a value greater than the second temperature correction coefficient KTCATL.

In step S42, the third temperature correction coefficient and the reference oxygen amount OSC calculated in step S12 are applied to equation (6) to calculate an inhibition determination threshold value OSDISABLE.

$$OSDISABLE = OSC \times KTCATD \qquad (6)$$

In step S43, whether or not the absolute value of the inflowing oxygen amount OS is greater than the inhibition determination threshold value OSDISABLE is determined. When the answer to step S43 is affirmative (YES), an inhibition flag FDISABLEOS is set to "1" (step S45). When |OS| is equal to or less than OSDISABLE, the inhibition flag FDISABLEOS is set to "0" (step S44). If the inhibition flag FDISABLEOS is set to "1", the deterioration determination of the catalyst is stopped (refer to FIG. 9, step S71).

For example, when the throttle valve opening rapidly changes and the air-fuel ratio control cannot quickly follow the change in the intake air amount, the absolute value of the inflowing oxygen amount OS may become unusually large. In such a case, the deterioration determination cannot be accurately performed. Therefore, determination accuracy is prevented from being lowered by inhibiting the deterioration determination.

FIG. 7 is a flowchart of the KCMD calculation process executed in step S2 of FIG. 3.

In step S51, whether or not the perturbation of the air-fuel ratio is being executed is determined. If the answer to step S51 is affirmative (YES), whether or not the air-fuel ratio switching parameter KOSFB, set in the process of FIGs. 4 and 5, is equal to the preceding value KOSFBZ (step S52) is determined.

If the answer to step S51 or S52 is negative (NO) and the perturbation is not executed, or if the value of the air-fuel ratio switching parameter KOSFB has changed, the target air-fuel ratio coefficient KCMD is set to "1.0" (step S53), and the process proceeds to step S54. If KOSFB is equal to KOSFBZ, the process immediately proceeds to step S54.

In step S54, whether or not the air-fuel ratio switching parameter KOSFB is equal to "1" is determined. If the answer to step S54 is affirmative (YES), the target air-fuel ratio coefficient KCMD is updated by equation (7) (step S55).

$$KCMD = KCMD + \Delta KCMD \qquad (7)$$

where $\Delta KCMD$ is a predetermined updating value, for example, is set to "0.0002".

If the air-fuel ratio switching parameter KOSFB is equal to "1", the target air-fuel ratio coefficient KCMD gradually increases from "1.0" by repeatedly executing step S55. That is, the air-fuel ratio gradually changes in the rich direction.

If KOSFB is equal to "-1" in step S54, the target air-fuel ratio coefficient KCMD is updated by equation (8) (step S56).

$$KCMD = KCMD - \Delta KCMD \qquad (8)$$

Therefore, if the air-fuel ratio switching parameter KOSFB is equal to "-1", the target air-fuel ratio coefficient KCMD gradually decreases from "1.0" by repeatedly executing step S56. That is, the air-fuel ratio gradually changes in the lean direction.

In steps S57 to S60, a limit process of the calculated target air-fuel ratio coefficient KCMD is performed. That is, if the target air-fuel ratio coefficient KCMD is greater than an upper limit value KCMDH (for example, "1.03"), the target air-fuel ratio coefficient KCMD is set to the upper limit value KCMDH (steps S57, S58). If the target air-fuel ratio coefficient KCMD is less than a lower limit value KCMDL (for example, "0.97"), the target air-fuel ratio coefficient KCMD is set to the lower limit value KCMDL (steps S59, S60).

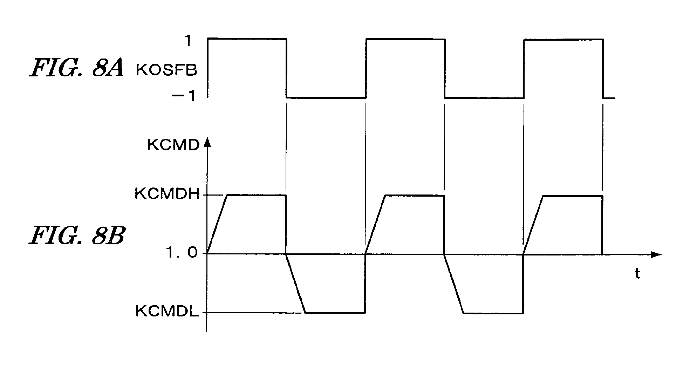

According to the process of FIG. 7, the target air-fuel ratio coefficient KCMD changes, as shown in FIG. 8B, according to the value of the air-fuel ratio switching parameter KOSFB (FIG. 8A).

FIGs. 9 and 10 show a flowchart of the deterioration determination process executed in step S3 of FIG. 3.

In step S71, whether or not the inhibition flag FDISABLEOS is equal to "1" is determined. If the answer to step S71 is negative (NO), whether or not the perturbation of the air-fuel ratio is being executed (step S72) is determined. If the answer to step S71 is affirmative (YES) or the answer to step S72 is negative (NO), a maximum value SVO2MAX of the O2 sensor output SVO2 is set to "0" and a minimum value SVO2MIN is set to "1500" (step S73), and the process immediately ends.

If the answer to step S72 is affirmative (YES), i.e., if the perturbation of the air-fuel ratio is being executed, whether or not the air-fuel ratio switching parameter KOSFB is equal to the preceding value KOSFBZ (step S74) is determined. If KOSFB is equal to KOSFBZ, the maximum value SVO2MAX and the minimum value SVO2MIN are updated by equations (9) and (10). The right side of equation (9) is an operation for selecting a greater one of the preceding maximum value SVO2MAX and the present O2 sensor output SVO2. The right side of equation (10) is an operation for selecting a smaller one of the preceding minimum value SVO2MIN and the present O2 sensor output SVO2. After executing step S75, the process proceeds to step S89.

$$SVO2MAX = max(SVO2MAX, SVO2) \qquad (9)$$

$$SVO2MIN = min(SVO2MIN, SVO2) \qquad (10)$$

If the answer to step S74 is negative (NO), i.e., immediately after the air-fuel ratio switching parameter KOSFB has changed, a second stored value SVO2LP2 of the maximum value SVO2MAX or the minimum value SVO2MIN is set to a first stored value SVO2LP1 (step S76). The first stored value SVO2LP1 is set to the maximum value SVO2MAX or the minimum value SVO2MIN in step S78 or S80 immediately after the latest air-fuel ratio switching.

In step S77, whether or not the air-fuel ratio switching parameter KOSFB is equal to "1" is determined. If the answer to step S77 is affirmative (YES), the first stored value SVO2LP1 is set to the present maximum value SVO2MAX, and the maximum value SVO2MAX is reset to "0" (step S78). If the air-fuel ratio switching parameter KOSFB is equal to "-1", the answer to step S77 is negative (NO). Then, the process immediately proceeds to step S79.

In step S79, whether or not the air-fuel ratio switching parameter KOSFB is equal to "-1" is determined. If the air-fuel ratio switching parameter KOSFB is equal to "-1", the process proceeds to step S80, in which the first stored value SVO2LP1 is set to the present minimum value SVO2MIN, and the minimum value SVO2MIN is reset to "1500" (step S78). If the air-fuel ratio switching parameter KOSFB is equal to "1", the answer to step S79 is negative (NO). Then, the process immediately proceeds to step S81.

In step S81, a third difference parameter SVO2D3 indicative of a difference between the maximum value SVO2MAX and the minimum value SVO2MIN is set to a second difference parameter SVO2D2, and the second difference parameter SVO2D2 is set to a first difference parameter SVO2D1. Thereafter, the first difference parameter SVO2D1 is updated in steps S82 to S87.

In step S82, whether or not the second stored value SVO2LP2 is greater than a predetermined value SVO2OBJ corresponding to the stoichiometric ratio, and the first stored value SVO2LP1 is less than the predetermined value SVO2OBJ are determined. If the answer to step S82 is negative (NO), it is further determined whether or not the second stored value SVO2LP2 is less than the predetermined value SVO2OBJ, and the first stored value SVO2LP1 is greater than the predetermined value SVO2OBJ (step S84). If both of the answers to steps S82 and S84 are negative (NO), i.e., both of the first and the second stored values SVO2LP1 and SVO2LP2 are less than the predetermined value SVO2OBJ, or when both of the first and the second stored values SVO2LP1 and SVO2LP2 are greater than the predetermined value SVO2OBJ, it is indicated that the O2 sensor output SVO2 hardly changes (stays at a substantially constant level). Accordingly, the first difference parameter SVO2D1 is set to "0" (step S87), and the process proceeds to step S88.

If the answer to either of steps S82 or S84 is affirmative (YES), i.e., the maximum value SVO2MAX is greater than the predetermined value SVO2OBJ and the minimum value SVO2MIN is less than the predetermined value SVO2OBJ at consecutive timings of the air-fuel ratio switching, the first stored value SVO2LP1 and the second stored value SVO2LP2 are applied to equation (11) to calculate the first difference parameter SVO2D1 (step S86). Thereafter, the process proceeds to step S88.

$$SVO2D1 = |SVO2LP1 - SVO2LP2| \qquad (11)$$

In step S88, a minimum difference value SVO2D, which is the minimum value of the first-to-third difference parameters SVO2D1, SVO2D2, and SVO2D3, is calculated by equation (12). Further, the minimum difference value SVO2D is integrated to calculate a determination parameter RESULT by equation (13), and a counter CRESULT is incremented by "1". The determination parameter RESULT indicates the deterioration degree of the three-way catalyst 14a.

$$SVO2D = min(SVO2D1, SVO2D2, SVO2D3) \qquad (12)$$

$$RESULT = RESULT + SVO2D \qquad (13)$$

Unless the difference parameter SVO2D1 takes a large value at three consecutive timings or more, the minimum difference value SVO2D takes a relatively small value. Therefore, by using the minimum difference value SVO2D, which is the minimum value among the difference parameters SVO2D1, SVO2D2, and SVO2D3 obtained at three consecutive sampling timings, any influence of a temporary change in the O2 sensor output SVO2 can be eliminated. Accordingly, an accurate determination parameter RESULT can be obtained.

In step S89, whether or not the value of the counter CRESULT is greater than a predetermined number CRST0 (for example, "6") is determined. If the answer to step S89 is negative (NO), the process immediately ends. If the value of the counter CRESULT exceeds the predetermined number CRST0 in step S89, the process proceeds to step S90, wherein whether or not the determination parameter RESULT is greater than the deterioration determination threshold value RSTTH is determined. If the answer to step S90 is negative (NO), the three-way catalyst 14a is determined to be normal (step S92). If the determination parameter RESULT exceeds the deterioration determination threshold value RSTTH, the three-way catalyst 14a is determined to be abnormal (step S91) or deteriorated. The warning lamp is turned on when the three-way catalyst 14a is determined to be abnormal.

The determination parameter RESULT takes a value substantially equal to zero when the O2 sensor output SVO2 changes as shown in FIG. 2A, i.e., when the three-way catalyst 14a is normal. On the other hand, the determination parameter RESULT takes a large value when the O2 sensor output SVO2 changes as shown in FIG. 2B, i.e., when the three-way catalyst 14a is deteriorated. Accordingly, the deterioration degree of the three-way catalyst 14a can be accurately detected by using the determination parameter RESULT.

As described above, in this embodiment, the amount OS of oxygen flowing into the three-way catalyst 14a is calculated according to the oxygen concentration parameter O2N calculated according to the LAF sensor 17 output and the intake air flow rate GAIR detected by the intake air flow rate sensor 7, and perturbation control of the air-fuel ratio is performed. During perturbation control, the air-fuel ratio is controlled to alternately change between lean and rich with respect to the stoichiometric ratio according to a comparison result obtained by comparing the inflowing oxygen amount OS with the rich limit value OSOBJR or the lean limit value OSOBJL. Further, the determination parameter RESULT indicative of the deterioration degree of the three-way catalyst 14a is calculated based on the O2 sensor output SVO2 during execution of perturbation control. The rich limit value OSOBJR and the lean limit value OSOBJL, which are target values of the inflowing oxygen amount OS, are set so that the O2 sensor output SVO2 may hardly change when the three-way catalyst is normal and the O2 sensor output SVO2 may greatly change when the three-way catalyst is deteriorated. Therefore, the deterioration degree can be detected quickly at the time the catalyst begins to deteriorate with little degradation of the exhaust characteristics and without degrading the exhaust characteristic at all when the catalyst is normal.

Further, an amount of oxygen which can be stored in the three-way catalyst 14a changes depending on the intake air flow rate GAIR (the amount of oxygen decreases as the intake air flow rate GAIR increases). Therefore, appropriate target value setting is performed by setting the rich limit value OSOBJR and the lean limit value OSOBJL so as to decrease as the intake air flow rate GAIR increases, wherein deterioration of the exhaust characteristics is suppressed.

Further, the amount of oxygen which can be stored in the three-way catalyst 14a changes depending on the catalyst temperature TCAT. Therefore, the switching timing of the air-fuel ratio is made appropriate by performing the correction with the temperature correction coefficients KTCATR and KTCATL to accurately detect the deterioration degree of the catalyst and to positively prevent the exhaust characteristics from deteriorating.

Further, since the three-way catalyst 14b is provided downstream of the O2 sensor 18, HC or NOx can be prevented from being emitted and good exhaust characteristics can be maintained when the first three-way catalyst 14a is deteriorated.

In this embodiment, the intake air flow rate sensor 7, the LAF sensor 17, and the O2 sensor 18 respectively correspond to the intake air flow rate detecting means, the first oxygen concentration sensor, and the second oxygen concentration sensor. Further, the ECU 5 constitutes the inflowing oxygen amount calculating means, the air-fuel ratio switching control means, the deterioration detecting means, and the inhibiting means. Specifically, steps S11 and S16 of FIG. 4 correspond to the inflowing oxygen amount calculating means. Steps S12 to S15 and S17 to S28 of FIG. 4, steps S31 to S40 of FIG. 5, and the process of FIG. 7 correspond to the air-fuel ratio switching control means; steps S72 to S81 of FIG. 9 and steps S82 to S92 of FIG. 10 correspond to the deterioration detecting means; and steps S41 to S45 of FIG. 5 and step S71 of FIG. 9 correspond to the inhibiting means.

Second Embodiment

In the second embodiment, the deterioration of catalyst determination process shown in the first embodiment is further improved. The second embodiment is the same as the first embodiment except for the points described below.

1) During the fuel cut operation in which the fuel supply to the engine 1 is interrupted, a fuel cut output VLAFFC, which is a characteristic change parameter indicative of a change in the output characteristic of the LAF sensor 17, is detected, and the LAF sensor output VLAF is corrected according to the fuel cut output VLAFFC.

2) A rich condition updating value of $\Delta$ KCMDR and a lean condition updating value $\Delta$ KCMDL are used instead of the predetermined $\Delta$ KCMD of the target equivalent ratio KCMD. The rich condition updating value $\Delta$ KCMDR is set according to the intake air flow rate GAIR and the rich limit value OSOBJR. The lean condition updating value $\Delta$ KCMDL is set according to the intake air flow rate GAIR and the lean limit value OSOBJL.

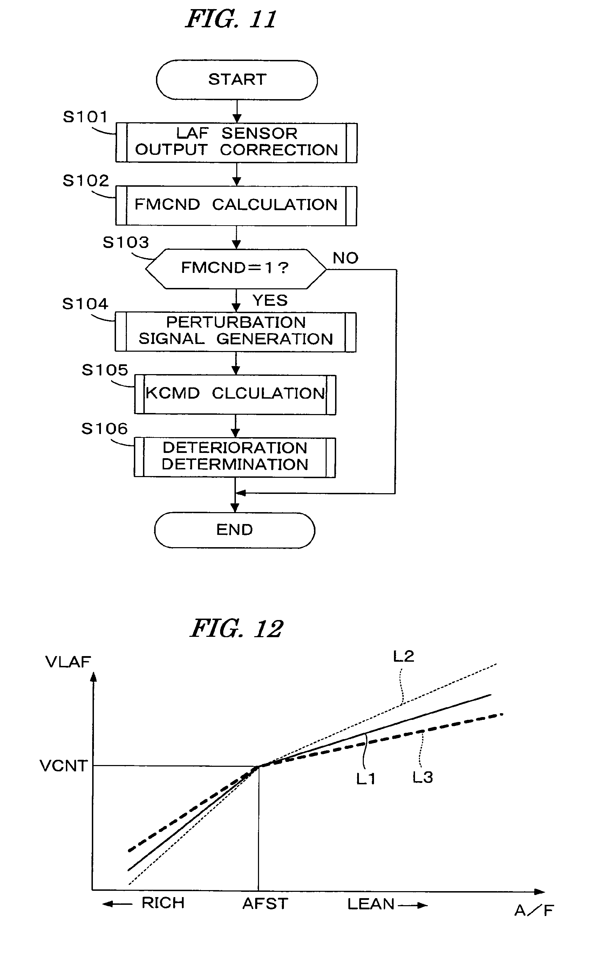

FIG. 11 is a flowchart showing a main routine of the deterioration determination process for the three-way catalyst in this embodiment. This process is executed at predetermined time intervals (for example, 10 milliseconds) by the CPU in the ECU 5.

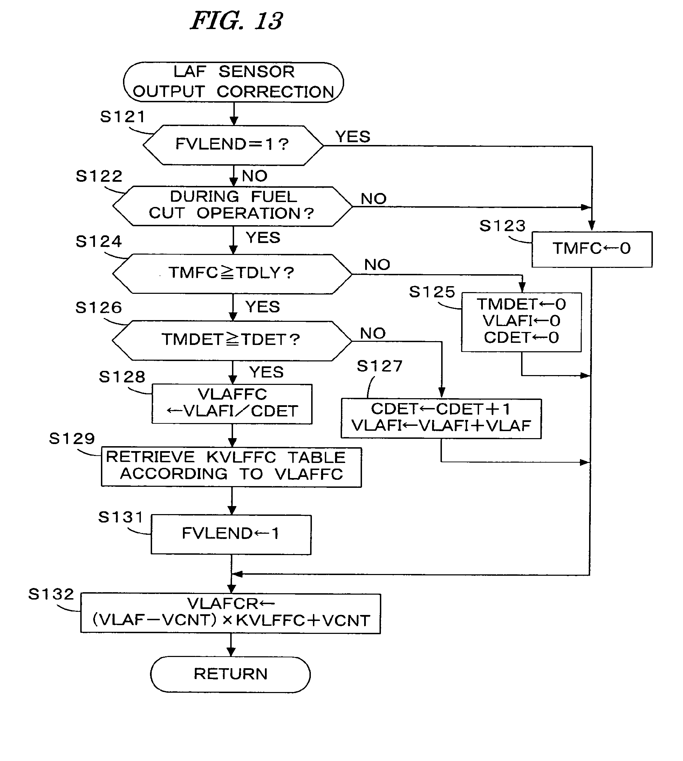

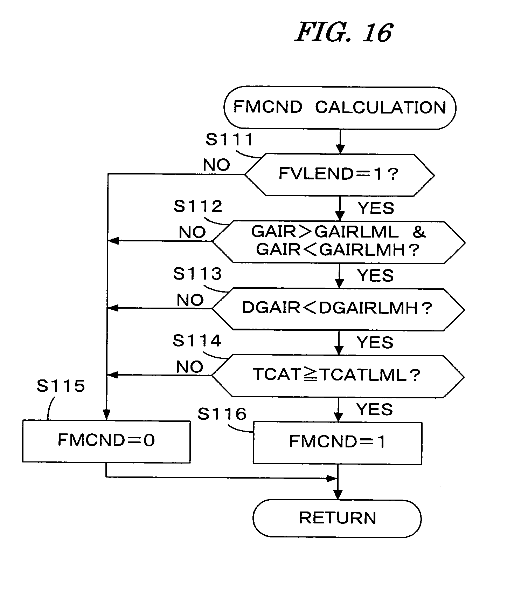

In step S101, a LAF sensor output correction process shown in FIG. 13 is performed, and a sensor output VLAF is corrected according to a change in the output characteristic of the LAF sensor 17. In step S102, a FMCND calculation process shown in FIG. 16 is performed, and the determination permission flag FMCND is set to "1" when the execution condition of the deterioration determination is satisfied.

In step S103, whether or not the determination permission flag FMCND is equal to "1" is determined. If the answer to step S103 is negative (NO), the process immediately ends. If FMCND is equal to "1", the perturbation signal generation process (step S104), the KCMD calculation process (S105), and the deterioration determination process (S106) are successively executed.

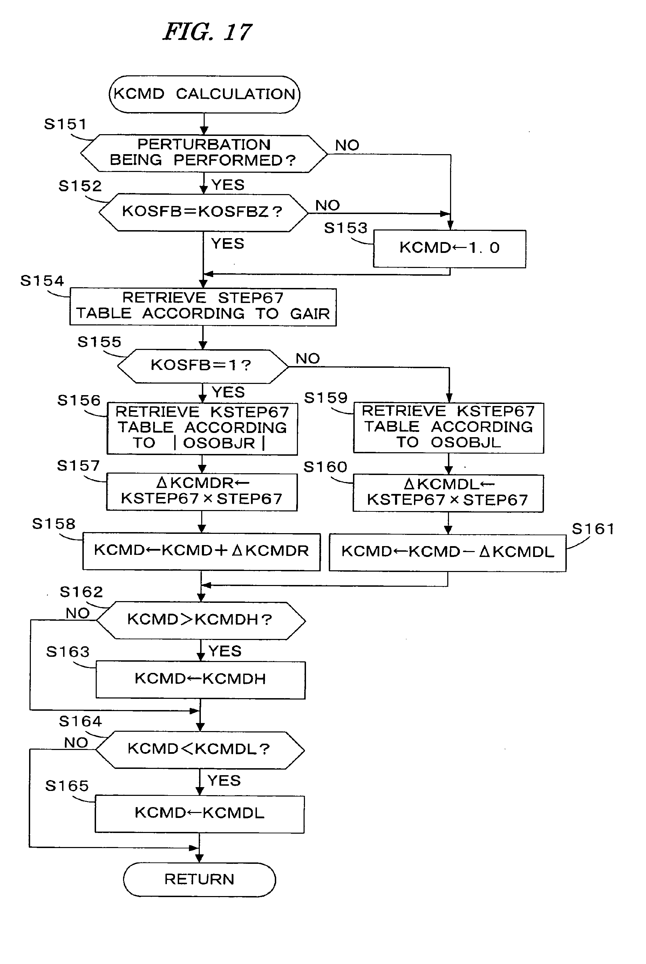

The perturbation signal generation process of step S104 and the deterioration determination process of step S106 are the same as the processes shown in FIGs. 4, 5, 9 and 10 of the first embodiment. In step S105, the KCMD calculation process shown in FIG. 17 is performed.

FIG. 12 illustrates the output characteristic of the LAF sensor 17, i.e., an aging change in a relationship between the LAF sensor output VLAF and the air-fuel ratio A/F. The solid line L1 of FIG. 12 indicates an average characteristic in the initial condition. The dashed line L2 indicates an example in which the inclination of the line changes in the increasing direction. The dashed line L3 indicates an example in which the inclination of the line changes in the decreasing direction. The LAF sensor output VLAF is corrected so that the characteristic shown by either of the dashed lines L2 or L3 coincides with the characteristic shown by the solid line L1 by the correcting calculation described below.

FIG. 13 is a flowchart showing the LAF sensor output correction process executed in step S101 of FIG. 11.

In step S121, whether or not a correction end flag FVLEND is equal to "1" is determined. The correction end flag FVLEND is set to "1" when the correction is completed in step S131. Therefore, the answer to step S121 is negative (NO) at first, and whether or not a fuel cut operation of the engine 1 is being performed (step S122) is determined. If a fuel cut operation is not being performed, a value of an upcount timer TMFC is set to "0" (step S123), and the process immediately proceeds to step S132.

If a fuel cut operation is being performed, whether or not the value of the timer TMFC is equal to or greater than a predetermined waiting time period TDLY (for example, 3 seconds) in step S124 is determined. Since the answer to step S124 is negative (NO) at first, the process proceeds to step S125, in which a value of an upcount timer TMDET is set to "0", and an integrated value VLAFI of the LAF sensor output VLAF and a value of a counter CDET are set to "0". Thereafter, the process proceeds to step S132.

If the answer to step S124 becomes affirmative (YES), the process proceeds to step S126, wherein whether or not the value of the timer TMDET is equal to or greater than a predetermined detection time period TDET (for example, 2.5 seconds) is determined. Since the answer to step S126 is negative (NO) at first, the process proceeds to step S127, in which the counter CDET is incremented by "1" and the integrated value VLAFI is calculated by equation (21). Thereafter, the process proceeds to step S132.

$$VLAFI = VLAFI + VLAF \qquad (21)$$

where, VLAFI on the right side is a preceding calculated value.

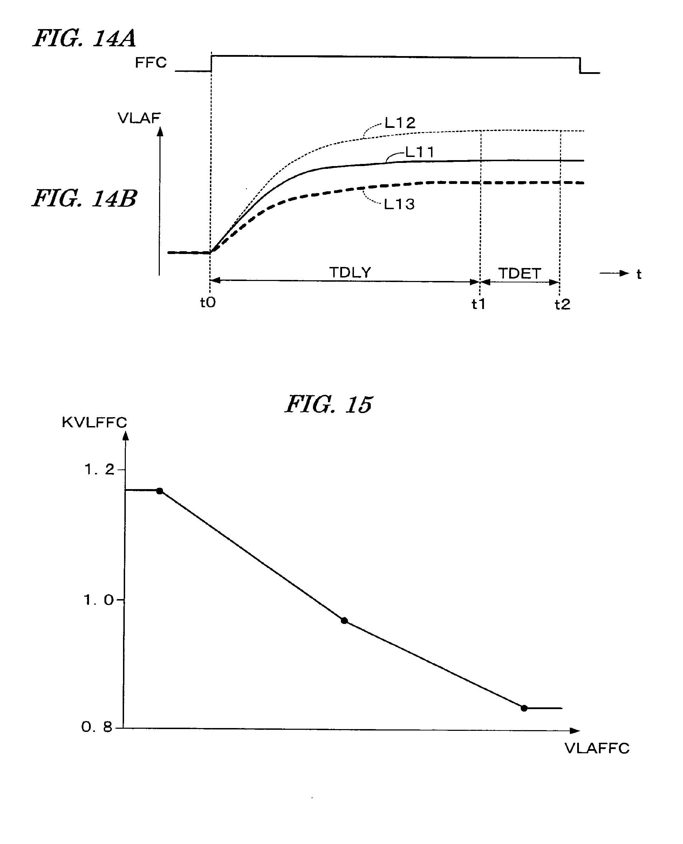

If the answer to step S126 is affirmative (YES), the process proceeds to step S128 in which the fuel cut output VLAFFC, which is an average value of the LAF sensor output detected in the predetermined detection time period TDET, is calculated by equation (22). That is, as shown in FIGs. 14A and 14B, the fuel cut output VLAFFC corresponds to an average value of the LAF sensor output VLAF during the detection time period from time t1 to time t2. Time t1 is a time when the predetermined waiting time period TDLY has elapsed from time t0 when the fuel cut operation started (a time when a flag FFC is changed from "0" to "1 ").

$$VLAFFC = VLAFI/CDET \qquad (22)$$

The solid line L11 and dashed lines L12 and L13 of FIG. 14B correspond respectively to the solid line L1 and the dashed lines L2 and L3 of FIG. 12. That is, the solid line L11 indicates an average characteristic; the dashed line L12 corresponds to an example in which an inclination of the straight line indicative of the output characteristic changes in the increasing direction; and the dashed line L13 corresponds to an example in which the inclination changes in the decreasing direction.

In step S129 of FIG. 13, a KVLFFC table shown in FIG. 15 is retrieved according to the fuel cut output VLAFFC to calculate an inclination correction coefficient KVLFFC. The KVLFFC table is set so that the correction coefficient KVLFFC decreases as the fuel cut output VLAFFC becomes higher, such as shown in FIG. 15.

In step S131, the correction end flag FVLEND is set to "1". Thereafter, the process ends. After the correction end flag FVLEND is set to "1", the answer to step S121 is affirmative (YES), and the process proceeds to step S132 via step S123.

In step S132, the LAF sensor output VLAF and the inclination correction coefficient KVLFFC calculated in step S129 are applied to the right side of equation (23) to calculate a corrected LAF sensor output VLAFCR. The inclination correction coefficient KVLFFC is initialized to "1.0" before execution of step S129.

$$VLAFCR = (VLAF - VCNT) \times KVLFFC + VCNT \qquad (23)$$

where, VCNT is a LAF sensor output corresponding to a stoichiometric ratio AFST, as shown in FIG. 12.

By the correction using the equation (23), the output characteristics shown by the dashed lines L2 and L3 in FIG. 12 are corrected to the characteristic shown by the solid line L1.

Therefore, in this embodiment, the oxygen concentration parameter O2N used in the perturbation signal generation process of step S104 of FIG. 11 is calculated using the corrected LAF sensor output VLAFCR.

FIG. 16 is a flowchart of a FMCND calculation process executed in step S102 of FIG. 11.

In step S111, whether or not the correction end flag FVLEND is equal to "1" is determined. If the answer to step S111 is affirmative (YES), whether or not the intake air flow rate GAIR is greater than a predetermined lower limit value GAIRLML (for example, 8 [g/sec]), and less than a predetermined upper limit value GAIRLMH (for example, 16 [g/sec]) (step S112) is determined. If the answer to step S112 is affirmative (YES), whether or not a change amount DGAIR of the intake air flow rate GAIR (for example, a difference between the present value of the intake air flow rate GAIR and the value detected 500 milliseconds before) is less than a predetermined upper limit change amount DGAIRLMH (for example, 3 [g/sec]) (step S113) is determined. If the answer to step S113 is affirmative (YES), it is further determined whether or not the catalyst temperature TCAT is equal to or greater than a predetermined lower limit temperature TCATLML (for example, 300 °C) (step S114).

If the answer to step S114 is affirmative (YES), the determination permission flag FMCND is set to "1" in order to permit an execution of the catalyst deterioration determination. On the other hand, if any one of the answers to steps S111 to S114 is negative (NO), the determination permission flag FMCND is set to "0" and the catalyst deterioration determination is not performed.

FIG. 17 is a flowchart of the KCMD calculation process executed in step S105 of FIG. 11.

Steps S151 to 153 of this process are the same as steps S51 to S53 of FIG. 7, and steps S155 and S162 to S165 are the same as steps S54 and S57 to S60 of FIG. 7. The only differences between FIG. 17 and FIG. 7 are described below.

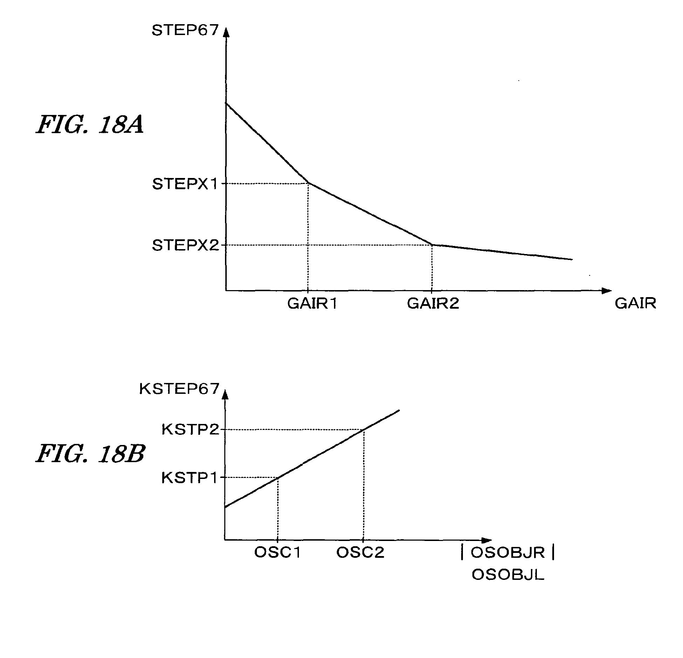

In step S154, a STEP67 table shown in FIG. 18A is retrieved according to the intake air flow rate GAIR to calculate a basic updating value STEP67. The STEP67 table is set so that the basic updating value STEP67 decreases as the intake air flow rate GAIR increases. In FIG. 18A, flow rates GAIR1 and GAIR2 are respectively set, for example, to 10 [g/sec] and 20 [g/sec], and updating values STEPX1 and STEPX2 are respectively set, for example, to 0.001 and 0.002.

When the air-fuel ratio switching parameter KOSFB is equal to "1", the process proceeds from step S155 to step S156 in which a KSTEP67 table shown in FIG. 18B is retrieved according to the absolute value of the rich limit value OSOBJR to calculate a step correction coefficient KSTEP67. The KSTEP67 table is set so that the step correction coefficient KSTEP67 increases as the absolute value of the rich limit value OSOBJR or the lean limit value OSOBJL increases. In FIG. 18B, oxygen amounts OSC1 and OSC2 are respectively set, for example, to 10 and 20, and coefficient values KSTEP1 and KSTEP2 are respectively set to 1.0 and 2.0.

In step S157, the step correction coefficient KSTEP67 and the basic updating value STEP67 are applied to equation (24) to calculate a rich updating value $\Delta$ KCMDR. In step S158, the calculated rich updating value $\Delta$ KCMDR is applied to equation (25) to update the target air-fuel ratio coefficient KCMD.

$$\Delta KCMDR = KSTEP67 \times STEP67 \qquad (24)$$

$$KCMD = KCMD + \Delta KCMDR \qquad (25)$$

On the other hand, if the air-fuel ratio switching parameter KOSFB is equal to "-1", the process proceeds from step S155 to step S159 in which the KSTEP67 table shown in FIG. 18B is retrieved according to the lean limit value OSOBJL to calculate the step correction coefficient KSTEP67.

In step S160, the step correction coefficient KSTEP67 and the basic updating value STEP67 are applied to equation (26) to calculate a lean updating value $\Delta$ KCMDL. In step S161, the calculated lean updating value $\Delta$ KCMDL is applied to equation (27) to update the target air-fuel ratio coefficient KCMD.

$$\Delta KCMDL = KSTEP67 \times STEP67 \qquad (26)$$

$$KCMD = KCMD - \Delta KCMDL \qquad (27)$$

According to the process of FIG. 17, the updating values $\Delta$ KCMDR and $\Delta$ KCMDL, which are parameters corresponding to the updating rate of gradually increasing or decreasing the target air-fuel ratio coefficient KCMD, are set so as to take a smaller value as the intake air flow rate GAIR increases and a greater value as the rich limit value OSOBJR and the lean limit value OSBJL increase. Accordingly, in a high-load operating condition, wherein the intake air flow rate is high, the updating rate of the target air-fuel ratio coefficient KCMD decreases, and influence of the response characteristic deterioration of the O2 sensor 18 can be reduced, thereby making it possible to perform accurate deterioration determination of the catalyst. On the other hand, in a low-load operating condition, wherein the intake air flow rate is low, the updating rate of the target air-fuel ratio coefficient KCMD is raised. Accordingly, the time period necessary for the deterioration determination of the catalyst can be shortened.

Further, in this embodiment, the process (FIG. 13) for correcting the aging change in the output characteristic (inclination of the straight line indicative of the relationship between the air-fuel ratio A/F and the sensor output VLAF) of the LAF sensor 18 is performed. Therefore, the calculation accuracy of the amount of oxygen flowing into the three-way catalyst 14a can be maintained to perform accurate deterioration determination of the catalyst without being influenced by the aging change in the output characteristic of the LAF sensor 18.

In this embodiment, the process of FIG. 17 corresponds to a part of the air-fuel ratio switching control means; steps S122 to S128 of FIG. 13 correspond to the characteristic change detecting means; and steps S129 and S130 of FIG. 13 correspond to the correcting means.

The present invention is not limited to the embodiments described above, and various modifications may be made. For example, in the embodiments described above, the three-way catalysts 14a and 14b are contained in one container. Alternatively, the two catalysts may be contained in two separate containers. Further, even if the three-way catalyst is not provided downstream of the O2 sensor 18, the present invention is applicable. Even in such case, the present invention can reduce deterioration of the exhaust characteristics when performing the deterioration determination of the catalyst, as compared with the conventional technique.

Further, deterioration determination of the response characteristic of the LAF sensor 18 may be performed, and operation for compensating the response deterioration of the LAF sensor 18 may be performed when the determined deterioration degree of the LAF sensor becomes large. The deterioration determination of the catalyst may be performed using the LAF sensor output after the compensation. In this case, in the FMCND calculation process of FIG. 16, setting of the determination permission flag FMCND may be performed by adding a condition of completing the compensation of the response deterioration to the deterioration determination execution condition.

The present invention can be applied also to the deterioration determination of a catalyst for purifying exhaust gases provided in an exhaust system of a watercraft propulsion engine, such as an outboard engine having a vertically extending crankshaft.

The present invention may be embodied in other specific forms without departing from the spirit or essential characteristics thereof. The presently disclosed embodiments are, therefore, to be considered in all respects as illustrative and not restrictive, the scope of the invention being indicated by the appended claims, rather than the foregoing description, and all changes which come within the meaning and range of equivalency of the claims are, therefore, to be embraced therein.

A deterioration detecting method for a catalyst in an exhaust system of an internal combustion engine for purifying exhaust gases. The system includes a first oxygen concentration sensor and a second oxygen concentration sensor disposed, respectively, upstream and downstream of the catalyst. Intake air flow rate of the engine is detected. An amount of oxygen flowing into the catalyst is calculated according to an oxygen concentration detected by the first sensor and the detected intake air flow rate. An air-fuel ratio of an air-fuel mixture supplied to the engine is controlled by alternately switching between lean and rich with respect to the stoichiometric ratio according to a result of comparison between the calculated and target values of the inflowing oxygen amount. A deterioration degree of the catalyst is detected based on an output of the second sensor when performing the switching control of the air-fuel ratio.

**Claims**

1. A deterioration detecting apparatus for a catalyst provided in an exhaust system of an internal combustion engine for purifying exhaust gases, said deterioration detecting apparatus detecting deterioration of said catalyst and comprising:

   intake air flow rate detecting means for detecting an intake air flow rate of said engine;
   a first oxygen concentration sensor disposed upstream of said catalyst;
   a second oxygen concentration sensor disposed downstream of said catalyst;
   inflowing oxygen amount calculating means for calculating an amount of oxygen flowing into said catalyst according to an oxygen concentration detected by said first oxygen concentration sensor and the intake air flow rate detected by said intake air flow rate detecting means;
   air-fuel ratio switching control means for controlling an air-fuel ratio of an air-fuel mixture to be supplied to said engine by alternately switching the air-fuel ratio to lean and rich with respect to the stoichiometric ratio according to a result of a comparison between the inflowing oxygen amount calculated by said inflowing oxygen amount calculating means and target values of the inflowing oxygen amount; and
   deterioration detecting means for detecting a deterioration degree of said catalyst based on an output of said second oxygen concentration sensor during an operation of said air-fuel ratio switching control means.

2. A deterioration detecting apparatus according to claim 1, wherein said air-fuel ratio switching control means performs the switching control of the air-fuel ratio according to a result of a comparison between an output of said second oxygen concentration sensor and predetermined values.

3. A deterioration detecting apparatus according to claim 1, wherein said air-fuel ratio switching control means calculates the target values according to the intake air flow rate.

4. A deterioration detecting apparatus according to claim 1, further including catalyst temperature detecting means for detecting a temperature of said catalyst, wherein said air-fuel ratio switching control means calculates the target values according to the detected temperature of said catalyst.

5. A deterioration detecting apparatus according to claim 1, further including inhibiting means for inhibiting the detection of the deterioration degree by said deterioration detecting means according to the inflowing oxygen amount.

6. A deterioration detecting apparatus according to claim 1, wherein said exhaust system is further provided with a catalyst for purifying exhaust gases downstream of said second oxygen concentration sensor.

7. A deterioration detecting apparatus according to claim 1, wherein said air-fuel ratio switching control means sets at least one updating rate of the air-fuel ratio at the time of switching the air-fuel ratio according to the intake air flow rate of said engine and the target values.

8. A deterioration detecting apparatus according to claim 1 further including:

   characteristic change detecting means for detecting a characteristic change parameter indicative of a change in an output characteristic of said first oxygen concentration sensor; and
   correcting means for correcting an output of said first oxygen concentration sensor according to the characteristic change parameter,
   wherein said inflowing oxygen amount calculating means calculates the inflowing oxygen amount using the output corrected by said correcting means.

9. A deterioration detecting method for a catalyst provided in an exhaust system of an internal combustion engine for purifying exhaust gases, said exhaust system having a first oxygen concentration sensor disposed upstream of said catalyst and a second oxygen concentration sensor disposed downstream of said catalyst, said deterioration detecting method comprising the steps of:

   a) detecting an intake air flow rate of said engine;

b) calculating an amount of oxygen flowing into said catalyst according to an oxygen concentration detected by said first oxygen concentration sensor and the detected intake air flow rate;

c) controlling an air-fuel ratio of an air-fuel mixture to be supplied to said engine by alternately switching the air-fuel ratio to lean and rich with respect to the stoichiometric ratio according to a result of comparison between the calculated inflowing oxygen amount and target values of the inflowing oxygen amount; and

d) detecting a deterioration degree of said catalyst based on an output of said second oxygen concentration sensor when performing the switching control of the air-fuel ratio in step c).

10. A deterioration detecting method according to claim 9, wherein the switching control of the air-fuel ratio is performed according to a result of comparison between an output of said second oxygen concentration sensor and predetermined values.

11. A deterioration detecting method according to claim 9, wherein the target values are calculated according to the intake air flow rate.

12. A deterioration detecting method according to claim 9, further including the step of detecting a temperature of said catalyst, wherein the target values are calculated according to the detected temperature of said catalyst.

13. A deterioration detecting method according to claim 9, further including the step of inhibiting the detection of the deterioration degree according to the inflowing oxygen amount.

14. A deterioration detecting method according to claim 9, wherein said exhaust system is further provided with a catalyst for purifying exhaust gases downstream of said second oxygen concentration sensor.

15. A deterioration detecting method according to claim 9, wherein at least one updating rate of the air-fuel ratio at the time of switching the air-fuel ratio is set according to the intake air flow rate of said engine and the target values.

16. A deterioration detecting method according to claim 9, further including the steps of:

i) detecting a characteristic change parameter indicative of a change in an output characteristic of said first oxygen concentration sensor; and

ii) correcting an output of said first oxygen concentration sensor according to the characteristic change parameter,

wherein the inflowing oxygen amount is calculated using the corrected output of said first oxygen concentration sensor.

*FIG. 1*

EP 1 837 502 A2

## FIG. 2A

SVO2

t

## FIG. 2B

SVO2

t

## FIG. 3

START

S1 — PERTURBATION SIGNAL GENERATION

S2 — KCMD CALCULATION

S3 — DETERIORATION DETERMINATION

END

## FIG. 4

```
        ┌─────────────────────────┐
        │      PERTURBATION        │
        │   SIGNAL  GENERATION     │
        └─────────────────────────┘
                     │
S11    ┌─────────────────────────┐
       │  RETRIEVE  O2N  TABLE    │
       │   ACCORDING  TO  KACT    │
       └─────────────────────────┘
                     │
S12    ┌─────────────────────────┐
       │  RETRIEVE  OSC  TABLE    │
       │   ACCORDING  TO  GAIR    │
       └─────────────────────────┘
                     │
S13    ┌─────────────────────────┐
       │ RETRIEVE  KTCATR  TABLE  │
       │   ACCORDING  TO  TCAT    │
       └─────────────────────────┘
                     │
S14    ┌─────────────────────────┐
       │ RETRIEVE  KTCATL  TABLE  │
       │   ACCORDING  TO  TCAT    │
       └─────────────────────────┘
                     │
S15    ┌─────────────────────────┐
       │  OSOBJR←OSC×KTCATR       │
       │  OSOBJL←OSC×KTCATL       │
       └─────────────────────────┘
                     │
S16    ┌─────────────────────────┐
       │   O2←O2N×GAIRAVE         │
       │   OS←OS+O2               │
       │   KOSFBZ←KOSFB           │
       └─────────────────────────┘
                     │
S17       < KOSFB=−1 ? >───YES───┐
                     │ NO         │
S19    < FRESETOS=1 ? >─── ...    │
```

OSOBJR←OSC×KTCATR
OSOBJL←OSC×KTCATL

O2←O2N×GAIRAVE
OS←OS+O2
KOSFBZ←KOSFB

S17  KOSFB=−1 ?  YES

S19  FRESETOS=1 ?   NO

YES

S22  O2<0 ?   NO

YES

S23  OS←0
FRESETOS←0

S20  OS>0 ?   NO

YES

S21  OS←0

S24  FRESETOS=1 ?   YES

NO

S25  OS<0 ?   NO

YES

S26  OS←0

S27  O2>0 ?   YES

NO

S28  OS←0
FRESETOS←0

(A)

(B)

19

## FIG. 5

A

S31 OS<OSOBJR? —YES→

NO ↓

B

S32 OS>OSOBJL? —NO→

YES ↓

S33 SVO2<SVO2LEAN & KOSLEAN=1? —YES→

NO ↓

S35 SVO2>SVO2RICH & KOSLEAN=0? —YES→

NO ↓

S37 KOSLEAN←1

S39 KOSLEAN←0

S38 KOSFB←-1
FRESETOS←1

S40 KOSFB←1
FRESETOS←1

S41 CALCULATE KTCATD ACCORDING TO TCAT

S42 OSDISABLE←OSC×KTCATD

S43 |OS|>OSDISABLE? —YES→

NO ↓

S44 FDISABLEOS←0

S45 FDISABLEOS←1

RETURN

FIG. 6A

FIG. 6B

FIG. 6C

FIG. 6D

FIG. 6E

## FIG. 7

```
        ( KCMD  CALCULATION )
                  │
S51        ┌──────▼──────────┐        NO
       ◇───┤  PERTURBATION   ├────────────────┐
           │ BEING PERFORMED?│                 │
           └──────┬──────────┘                 │
                  │ YES                         │
S52        ┌──────▼──────────┐   NO             │
       ◇───┤  KOSFB=KOSFBZ?  ├──────────┐       │
           └──────┬──────────┘          │       │
                  │                 S53 │       │
                  │ YES          ┌───────▼──────┐│
                  │              │  KCMD←1. 0   ││
                  │              └───────┬──────┘│
                  │                      └───────┤
S54        ┌──────▼──────────┐   NO             │
       ◇───┤    KOSFB=1?     ├────────┐   S56   │
           └──────┬──────────┘        │         │
                  │ YES               ▼         │
S55  ┌────────────▼─────────┐  ┌──────────────────┐
     │  KCMD←KCMD+ΔKCMD      │  │  KCMD←KCMD−ΔKCMD │
     └────────────┬─────────┘  └────────┬─────────┘
                  └──────────────────────┤
S57      NO ┌─────▼───────────┐
       ◇────┤  KCMD>KCMDH?    │
       │    └─────┬───────────┘
       │          │ YES
       │  S58 ┌───▼──────────┐
       │      │  KCMD←KCMDH  │
       │      └───┬──────────┘
       │          │
       └──────────┤
S59      NO ┌─────▼───────────┐
       ◇────┤  KCMD<KCMDL?    │
       │    └─────┬───────────┘
       │          │ YES
       │  S60 ┌───▼──────────┐
       │      │  KCMD←KCMDL  │
       │      └───┬──────────┘
       └──────────┤
                  │
              ( RETURN )
```

FIG. 8A KOSFB

FIG. 8B

## FIG. 9

```
              ┌─────────────────────┐
              │   DETERIORATION     │
              │   DETERMINATION     │
              └─────────────────────┘
                         │
      S71      ╱─────────────────────╲      YES
              ╱    FDISABLEOS=1 ?     ╲─────────────────┐
              ╲                       ╱                 │
               ╲─────────────────────╱                 │
                         │ NO                           │
      S72      ╱─────────────────────╲                  │
              ╱    PERTURBATION        ╲     NO          │
              ╱    BEING  PERFORMED?    ╲───────────────┤
              ╲                        ╱                 │
               ╲──────────────────────╱                 │
                         │ YES                           │
      S74      ╱─────────────────────╲      YES          │
              ╱   KOSFB=KOSFBZ ?      ╲──────────┐       │
              ╲                       ╱          │   S73 ▼
               ╲─────────────────────╱           │  ┌──────────────────┐
                         │ NO                     │  │ SVO2MAX←0        │
      S76      ┌─────────────────────┐            │  │ SVO2MIN←1500     │
              │  SVO2LP2←SVO2LP1     │            │  └──────────────────┘
              └─────────────────────┘            │          │
                         │                        │   ┌──────────┐
                         │                        │   │  RETURN  │
                         │                        │   └──────────┘
                         │                        │     S75
                         │                        ▼  ┌──────────────────────────────┐
                         │                  ┌─────────────────────────────────────┐
                         │                  │ SVO2MAX←max(SVO2, SVO2MAX)           │
                         │                  │ SVO2MIN←min(SVO2, SVO2MIN)           │
                         │                  └─────────────────────────────────────┘
                         │                                    │
      S77                │                                    │
      YES    ╱─────────────────────╲                         │
     ┌───────╱      KOSFB=1 ?        ╲                        │
     │       ╲                       ╱                        │
     │        ╲─────────────────────╱                         │
 S78 ▼                   │ NO                                 │
  ┌──────────────────┐   │                                    │
  │ SVO2LP1←SVO2MAX  │   │                                    │
  │ SVO2MAX←0        │   │                                    │
  └──────────────────┘   │                                    │
     │                   │           S79                      │
     └──────────────────►│  ╱─────────────────────╲           │
      YES                   ╱      KOSFB=-1 ?       ╲          │
     ┌──────────────────────╱                       ╱          │
     │ S80                  ╲─────────────────────╱            │
     ▼                                │ NO                     │
  ┌──────────────────┐                │                        │
  │ SVO2LP1←SVO2MIN  │                │         S81            │
  │ SVO2MIN←1500     │                │                        │
  └──────────────────┘                │                        │
     │                    ┌──────────────────────┐             │
     └───────────────────►│ SVO2D3←SVO2D2         │             │
                          │ SVO2D2←SVO2D1         │             │
                          └──────────────────────┘             │
                                     │                          │
                                  ┌─────┐                    ┌─────┐
                                  │  A  │                    │  B  │
                                  └─────┘                    └─────┘
```

## FIG. 10

## FIG. 11

```
              START

S101    LAF  SENSOR
        OUTPUT  CORRECTION

S102    FMCND  CALCULATION

S103    FMCND=1 ?          NO

                  YES

S104    PERTURBATION
        SIGNAL  GENERATION

S105    KCMD  CLCULATION

S106    DETERIORATION
        DETERMINATION

              END
```

## FIG. 12

```
VLAF                          L2


VCNT                     L1    L3


        RICH    AFST    LEAN         A/F
```

## FIG. 13

```
          ┌─────────────────────┐
          │     LAF  SENSOR     │
          │ OUTPUT  CORRECTION  │
          └─────────────────────┘
                     │
   S121              ▼
          ┌─────────────────────┐   YES
          ⟨    FVLEND=1?        ⟩──────────────────────────────┐
          └─────────────────────┘                              │
                     │ NO                                       │
   S122              ▼                                          │
          ┌─────────────────────┐   NO                         │
          ⟨   DURING  FUEL       ⟩─────────────────┐           │
          ⟨   CUT  OPERATION?    ⟩                 │           │
          └─────────────────────┘      S123        ▼           │
                     │ YES                 ┌──────────────┐     │
   S124              ▼                     │   TMFC←0     │     │
          ┌─────────────────────┐   NO     └──────────────┘     │
          ⟨   TMFC≧TDLY?         ⟩───────┐         │           │
          └─────────────────────┘        │         │           │
                     │ YES         S125   ▼         │           │
   S126              ▼            ┌──────────────┐  │           │
          ┌─────────────────────┐│   TMDET←0    │  │           │
          ⟨   TMDET≧TDET?       ⟩│   VLAFI←0    │  │           │
          └─────────────────────┘│   CDET←0     │  │           │
             │ YES    │ NO        └──────────────┘  │           │
   S128      ▼     S127 │              │            │           │
   ┌──────────────┐     ▼              │            │           │
   │   VLAFFC     │  ┌──────────────────┐          │           │
   │ ←VLAFI/CDET  │  │ CDET←CDET+1      │          │           │
   └──────────────┘  │ VLAFI←VLAFI+VLAF │          │           │
          │          └──────────────────┘          │           │
   S129    ▼                     │                  │           │
   ┌─────────────────────┐       │                  │           │
   │ RETRIEVE  KVLFFC TABLE│◄─────┘◄─────────────────┘           │
   │ ACCORDING  TO  VLAFFC │                                    │
   └─────────────────────┘                                      │
          │                                                     │
   S131    ▼                                                    │
   ┌──────────────┐                                             │
   │  FVLEND←1    │                                             │
   └──────────────┘                                             │
          │                                                     │
          ▼◄────────────────────────────────────────────────────┘
   S132 ┌────────────────────────────┐
        │  VLAFCR←                   │
        │ (VLAF−VCNT)×KVLFFC+VCNT    │
        └────────────────────────────┘
          │
          ▼
   ┌──────────────┐
   │   RETURN     │
   └──────────────┘
```

*FIG. 14A*

*FIG. 14B*

*FIG. 15*

## FIG. 16

```
        ┌─────────────────────────┐
        │   FMCND  CALCULATION     │
        └─────────────────────────┘
                     │
  S111              ▼
  NO    ╱───────────────────────╲
 ◄──────┤      FVLEND=1 ?        │
        ╲───────────────────────╱
                     │ YES
  S112              ▼
  NO    ╱───────────────────────╲
 ◄──────┤  GAIR>GAIRLML  &       │
        │  GAIR<GAIRLMH ?        │
        ╲───────────────────────╱
                     │ YES
  S113              ▼
  NO    ╱───────────────────────╲
 ◄──────┤   DGAIR<DGAIRLMH ?     │
        ╲───────────────────────╱
                     │ YES
  S114              ▼
  NO    ╱───────────────────────╲
 ◄──────┤   TCAT≧TCATLML ?       │
        ╲───────────────────────╱
                     │ YES
 S115              S116
┌──────────┐     ┌──────────┐
│ FMCND=0  │     │ FMCND=1  │
└──────────┘     └──────────┘
                     │
                     ▼
        ┌─────────────────┐
        │     RETURN       │
        └─────────────────┘
```

## FIG. 17

```
        ┌─────────────────────────┐
        │   KCMD  CALCULATION     │
        └─────────────────────────┘
                    │
S151    ◇ PERTURBATION              NO
        ◇ BEING  PERFORMED ?  ──────────────┐
                    │ YES                    │
S152    ◇ KOSFB=KOSFBZ ?   ─── NO ──────────┤
                    │              S153      │
                    │          ┌─────────────┴──┐
                    │          │  KCMD←1. 0     │
                    │ YES      └────────────────┘
                    │◄─────────────────┘
                    ▼
S154    ┌─────────────────────────┐
        │  RETRIEVE  STEP67       │
        │  TABLE ACCORDING TO GAIR│
        └─────────────────────────┘
                    │
S155        ◇ KOSFB=1 ?  ─── NO ──────────────────┐
                    │ YES                          │
S156 ┌──────────────────────┐  S159 ┌─────────────────────┐
     │ RETRIEVE KSTEP67     │       │ RETRIEVE KSTEP67    │
     │ TABLE ACCORDING      │       │ TABLE ACCORDING     │
     │ TO │OSOBJR│          │       │ TO OSOBJL           │
     └──────────────────────┘       └─────────────────────┘
S157 ┌──────────────────────┐  S160 ┌─────────────────────┐
     │ △KCMDR←              │       │ △KCMDL←            │
     │ KSTEP67 × STEP67     │       │ KSTEP67 × STEP67    │
     └──────────────────────┘       └─────────────────────┘
S158 ┌──────────────────────┐       ┌─────────────────────┐ S161
     │ KCMD←KCMD+△KCMDR     │       │ KCMD←KCMD−△KCMDL    │
     └──────────────────────┘       └─────────────────────┘
                    │◄─────────────────────┘
S162    NO  ◇ KCMD>KCMDH ?
        ┌───────────┤
        │           │ YES
        │   S163 ┌──────────────────┐
        │        │  KCMD←KCMDH      │
        │        └──────────────────┘
        │           │
S164    NO  ◇ KCMD<KCMDL ?
        ┌───────────┤
        │           │ YES
        │   S165 ┌──────────────────┐
        │        │  KCMD←KCMDL      │
        │        └──────────────────┘
        │           │
        └───────────┤
                    ▼
        ┌─────────────────────────┐
        │        RETURN           │
        └─────────────────────────┘
```

*FIG. 18A*

*FIG. 18B*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP H02207159 A